# EUROPEAN PATENT APPLICATION

(11) **EP 4 804 102 A1**
(43) Date of publication of application: **09.09.2026**
(21) Application number: 24897311.7
(22) Date of filing: 14.11.2024
(51) Int. Cl.: G06Q 30/015, G06Q 50/10

(54) **EVENT PRESENTATION SYSTEM AND EVENT PRESENTATION METHOD**

(30) Priority: 30.11.2023 JP 2023202603
(71) Applicant: ASICS Corporation, Kobe-shi, Hyogo 650-0021 (JP)
(72) Inventor: KAMIYA Ryo, Kobe-shi Hyogo 650-0021 (JP); HSU Lingyu, Kobe-shi Hyogo 650-0021 (JP); VANDERHOEVEN Alex, London, ON N6A 1B5 (CA); UEMURA Osamu, Kobe-shi Hyogo 650-0021 (JP); SHIMOMURA Koji, Kobe-shi Hyogo 650-0021 (JP); OGAWA Shingo, Kobe-shi Hyogo 650-0021 (JP); SHIODE Shigeo, Kobe-shi Hyogo 650-0021 (JP); TAKASHIMA Shingo, Kobe-shi Hyogo 650-0021 (JP); HATANO Genki, Kobe-shi Hyogo 650-0021 (JP)
(74) Representative: TBK
(86) International application number: PCT/JP2024/040429
(87) International publication number: WO 2025/115624

(57) **Abstract**

In an event presentation system 100, a product memory 64 stores information regarding a purchase purpose input by a past purchaser of an exercise-related product. An event memory 68 stores schedule information of an exercise-related event and information regarding a participation purpose input by a past participant of the exercise-related event. A purchase information acquisitor 55 acquires information indicating purchase of a product by a prospective purchaser. A purpose acquisitor 57 acquires information regarding a purchase purpose of a product for the prospective purchaser. The relation analyzer 56 determines an exercise-related event, as the recommended event, corresponding to a participation purpose related to a purchase purpose for the prospective purchaser. An event presenter 58 presents the determined recommended event to the prospective purchaser as an exercise-related event related to a purchase purpose for the prospective purchaser.

## Description

### TECHNICAL FIELD

The present disclosure relates to an event presentation system and an event presentation method.

### BACKGROUND ART

There is a known technology for a sales promotion system of promoting a sale of a service for railway users (for example, Patent Literature 1).

### RELATED-ART LITERATURE

### PATENT LITERATURE

Patent Literature 1: JP 2022-137424 A

### SUMMARY OF INVENTION

### TECHNICAL PROBLEM

In recent years, the possibility of making a useful proposal specific to an exercise-related product is being considered for a purchaser of the product.

The present disclosure has been made in view of such a situation, and an object of the present disclosure is to provide a technology of making a useful proposal specific to an exercise-related product for a purchaser of the product.

### SOLUTION TO PROBLEM

In order to solve the above problem, an event presentation system of one aspect of the present disclosure includes: a product memory structured to store information regarding a purchase purpose input by a past purchaser of an exercise-related product; an event memory structured to store schedule information of an exercise-related event and information regarding a participation purpose input by a past participant of the exercise-related event; a purchase information acquisitor structured to acquire information indicating purchase of a product by a prospective purchaser; a purpose acquisitor structured to acquire information regarding a purchase purpose of a product for the prospective purchaser; a relation analyzer structured to determine a recommended event that is an exercise-related event corresponding to a participation purpose related to a purchase purpose for the prospective purchaser; and an event presenter structured to present the recommended event determined, to the prospective purchaser, as an exercise-related event related to a purchase purpose for the prospective purchaser.

Another aspect of the present disclosure is an event presentation method. This method includes the steps of: acquiring information indicating purchase of a product by a prospective purchaser and information regarding a purchase purpose of a product for the prospective purchaser via a network; reading information from a region storing information regarding a purchase purpose input by a past purchaser of an exercise-related product; reading information from a region storing schedule information of an exercise-related event and information regarding a participation purpose input by a past participant of the exercise-related event; determining a recommended event that is an exercise-related event corresponding to a participation purpose related to a purchase purpose for the prospective purchaser; and presenting the recommended event determined, to the prospective purchaser via a network, as an exercise-related event related to a purchase purpose for the prospective purchaser.

Any combination of the above constituent elements and mutual replacement of the constituent elements and expressions of the present disclosure among methods, apparatuses, programs, temporary or non-temporary recording media storing programs, systems, and the like are also effective as aspects of the present disclosure.

### ADVANTAGEOUS EFFECTS OF INVENTION

According to the present disclosure, it is possible to provide a technology of making a useful proposal specific to an exercise-related product to a purchaser of the product.

### BRIEF DESCRIPTION OF DRAWINGS

[Fig. 1] Fig. 1 is a view illustrating a basic configuration of an event presentation system.
[Fig. 2] Fig. 2 is a functional block diagram illustrating each configuration of an event presentation server.
[Fig. 3] Fig. 3 is a view schematically illustrating an example of a sales screen of an exercise-related product.
[Fig. 4] Fig. 4 is a view schematically illustrating an example of a presentation screen of recommendation of an exercise-related event.
[Fig. 5] Fig. 5 is a flowchart illustrating a process of presenting a recommended event to a prospective purchaser of a product.
[Fig. 6] Fig. 6 is a view illustrating a basic configuration of an event presentation system in a second embodiment.
[Fig. 7] Fig. 7 is a functional block diagram illustrating each configuration of a product sales server.

### DESCRIPTION OF EMBODIMENTS

Hereinafter, a description will be given with reference to the drawings on the basis of an embodiment. In embodiments and modifications, the same or equivalent constituent elements are denoted by the same reference signs, and redundant description is omitted as appropriate.

### (First Embodiment)

A product related to exercise (hereinafter, referred to as "exercise-related product") such as running shoes or running wear is usually purchased for the purpose of using the product in exercise. Such an exercise-related product is often purchased particularly at the timing of the peak motivation to exercise using the product. If an event related to exercise (hereinafter, referred to as "exercise-related event") is proposed aiming at a moment of high motivation to exercise, a purchaser can obtain useful information that boosts the high motivation, and an event organizer can obtain an opportunity to attract a user with high motivation.

For some kinds of exercise, events are held such as races, competitions, lessons, and meetings. The exercise includes exercise for which races of a marathon, trail running, and the like are held, exercise for which competitions of soccer, tennis, golf, and the like are held, exercise for which lessons of walking, dance, yoga, and the like are held, and other various kinds of exercise. The lessons include practice meetings, lectures, and the like. The various events may include not only gathering events in the real world but also gathering events in virtual worlds.

In a first embodiment, information about a purchase purpose is acquired from a purchaser or a prospective purchaser of an exercise-related product, and an exercise-related event corresponding to a participation purpose related to the purchase purpose is presented as a recommended event. Examples of the prospective purchaser here include a person who intends to purchase an exercise-related product and a person who has actually taken a purchase procedure, and the term "prospective purchaser" is also generally used in a scene where the purchase procedure motivates receiving related information after the purchase. That is, the term "prospective purchaser" is only used for distinguishing from the "past purchaser" whose past purchase history is accumulated, and is not used for strictly identifying whether the purchase has been completed at the present moment. The information about an exercise-related event here may include information about an exercise event such as a race, a competition, or a lesson related to an exercise-related product, and in addition, information about a group of people related to an exercise-related product, and information about a facility related to an exercise-related product. Examples of the group of people related to an exercise-related product may include a team of athletes or fans of the exercise, and a group of students of a lesson. Examples of the exercise-related facility may include a place or a building where exercise is performed, such as an athletic track, a soccer ground, a swimming pool, or a golf course.

Examples of the exercise-related product include shoes and clothes worn during exercise, tools used in exercise, supplemental foods and beverages taken in during exercise, supplements, carry-on items and bags carried during exercise, and various related products used during exercise, before exercise, and after exercise.

In order to find a relation between an exercise-related product and an exercise-related event, each piece of information such as a purchase purpose of an exercise-related product, the kind of exercise, personal information of a purchaser, and a venue and a date of an exercise-related event is used as a parameter for analysis, and these pieces of information are accumulated in a server. Based on the relation between these parameters for analysis, an exercise-related event having a close relation with an exercise-related product to be purchased is presented as a recommended event to a prospective purchaser.
Specific examples of the parameter for analysis are as follows.
User-related parameters: age, gender, residential area, past exercise history, kind of sport of interest
Product-related parameters: product category (shoes, wear, tool, etc.), kind of sport (running, tennis, soccer, etc.), price range, purchase date
Event-related parameters: event type (competition, experience meeting, practice meeting, classroom, etc.), kind of sport, venue, date, participation cost, difficulty level
Combining these parameters enables relationship analysis as described below.
   · Associating event with exercise-related product purchased by specific age group or gender
   · Recommendation of event based on residential area
   · Estimation of kind of sport of interest from kind of purchased product, and recommendation of event of this sport

   · Recommendation of event timing corresponding to product purchase date
   · Recommendation of event with appropriate participation cost from price range
   · Recommendation of event at appropriate level based on past exercise history and degree of difficulty
These parameters are input to a machine learning model, and an optimal event can be recommended to each user by using a method such as pattern recognition or clustering.

A prospective purchaser of an exercise-related product is required to input not only the selection of a product to be purchased but also information such as information about the purchase purpose and the personal information of the prospective purchaser. The information about the purchased exercise-related product, the information about the purchase purpose, and the personal information of the purchaser are accumulated in the server and managed in association with each other.

An exercise-related event related to the kind of the exercise-related product to be purchased or the purchase purpose is extracted and presented as a recommended event to the prospective purchaser. The relation between the exercise-related product and the exercise-related event is mainly determined on the basis of the relation between the purchase purpose of the exercise-related product and the participation purpose of the exercise-related event. Specifically, the server accumulates user's attribute data, data of a product purchased by a prospective purchaser, and a history of an event selected by a prospective purchaser from a plurality of recommended events, selects a related feature value, and vectorizes the selected feature value using a method such as one-hot encoding or TF-IDF. The relationship between an exercise-related product and an exercise-related event is learned together with the relationship between a purchase purpose and a participation purpose. This learning result is referred to in the subsequent extraction of an exercise-related event. As more learning results are thus accumulated, the results become easier to utilize as big data. Alternatively, a prediction model that has learned a correlation between information about an exercise-related product, the purchase purpose of the product, and an exercise-related event may be created, and a list of exercise-related events having a strong relation with the exercise-related product to be purchased and the prospective purchaser may be created and presented on the basis of the prediction model.

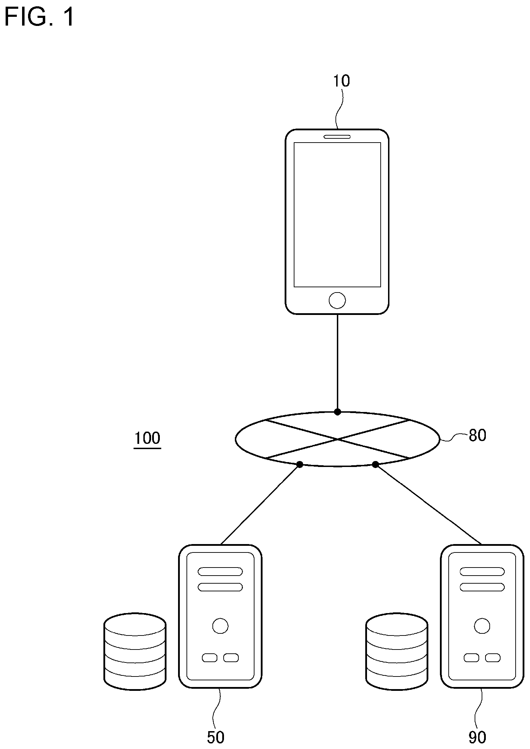

Fig. 1 illustrates a basic configuration of an event presentation system 100. The event presentation system 100 mainly includes a user terminal 10 and an event presentation server 50. The event presentation server 50 has both a function of processing a procedure in a product sales site for online sales of an exercise-related product and a function of presenting an exercise-related event to be recommended. The product sales site may be a site operated by a product manufacturer for direct sales. Alternatively, the product sales site may be an electronic commerce (EC) mall site specialized in online product sales mediation. In a modification, a server having a function of processing a procedure in a product sales site may be constructed in addition to the event presentation server 50, and may be included in the event presentation system 100. The event presentation system 100 may further include an alliance server 90 constructed to be capable of inquiring personal information accompanying a site that processes a registration procedure for participation in an exercise-related event and a service such as an event participation registration.

The event presentation server 50 and the alliance server 90 are server computers, and the server computers and a plurality of user terminals 10 are connected via a network 80 including the Internet, a local area network (LAN), and the like. The event presentation server 50 may be configured by a single server computer or may be configured by a combination of a plurality of server computers. A plurality or all of the functions of the event presentation server 50 and the alliance server 90 may be integrated to configure one server computer. The user terminal 10 is a terminal operated by a user, and may be an information terminal such as a smartphone or a tablet terminal owned by a user, or may be a personal computer. The user terminal 10 is configured, for example, by a combination of hardware such as a microprocessor, a touch panel, a memory, and a communication module.

The term "event presentation system" in the claims may refer to the entire event presentation system 100 or only the event presentation server 50. Alternatively, the term may refer to a combination of at least one of the user terminal 10 or the alliance server 90 and the event presentation server 50. Alternatively, a characteristic function or a function of storing characteristic information such as personal information may be distributed to or duplicated in at least any of the event presentation server 50, the user terminal 10, and the alliance server 90 to implement the event presentation system.

A user who is a prospective purchaser of an exercise-related product operates the user terminal 10 to access a product sales site constructed on the event presentation server 50, and performs an account registration procedure for product purchase, or if the user is a registered user, the user logs into the user's account. In the process of account registration, information identifying the user and information necessary for shipping a product are input. At this time, an exercise-related event corresponding to a participation purpose related to a purchase purpose of the exercise-related product for the prospective purchaser is presented as a recommended event to the user. The information identifying the user and the information necessary for shipping the product may be acquired by inquiring of another server personal information of the user recorded in the server, such as member information recorded for another service such as a participation registration procedure in an event. The event presentation server 50 accumulates information such as information about a purchase purpose of an exercise-related product for a past purchaser, information regarding an exercise-related event and a participation purpose of the event, and information about a history of selecting an exercise-related event by a past purchaser of an exercise-related product. The event presentation server 50 extracts an exercise-related event related to the user's purchase target exercise-related product and the purchase purpose of the product, and thus determines a recommended event. The user can select one of the presented one or more recommended events and apply to participate in the selected event.

If the user further inputs information indicating the area to which the user belongs and information about the user's exercise history, a more suitable exercise-related event is extracted on the basis of the area to which the user belongs, the exercise experience, and the competition level, and the more suitable exercise-related event is presented as a recommended event.

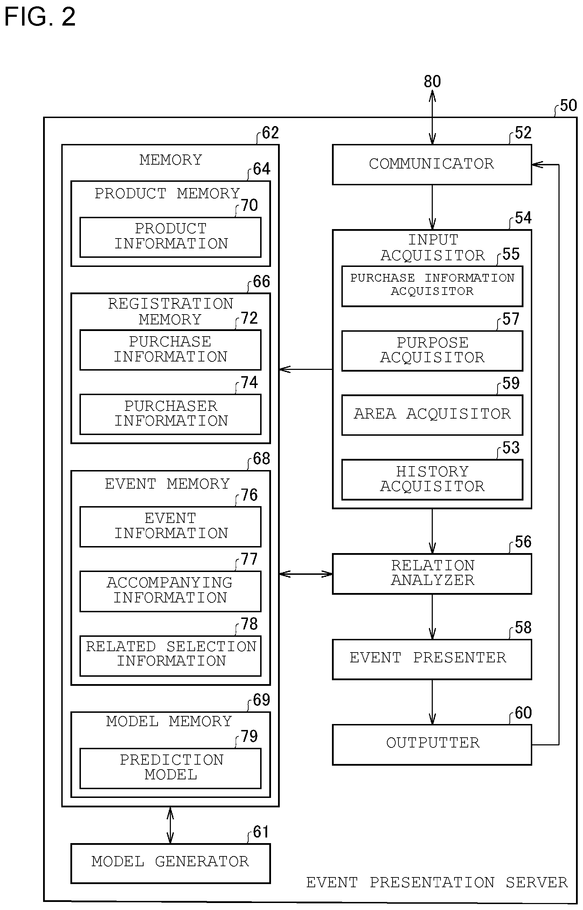

Fig. 2 is a functional block diagram illustrating each configuration of the event presentation server 50. Fig. 2 illustrates functional blocks regarding the event presentation server 50, and the functional blocks are implemented by coordination of various hardware and software configurations. Therefore, it is understood by those skilled in the art that these functional blocks can be implemented in various forms by only hardware, only software, or a combination of hardware and software.

The event presentation server 50 includes, for example, a combination of hardware such as a central processing unit (CPU), a graphics processing unit (GPU), a memory, a mass storage such as a solid state drive (SSD) or a hard disk, and a communication module. The above-described hardware shows that a general-purpose hardware configuration may be used as the server computer, but the event presentation server 50 is not limited to such a configuration. Alternatively, the event presentation server 50 may be implemented in the form of a cloud server, which is a virtual server constructed on the Internet. Also in another server described in the present description, a general-purpose hardware configuration or a cloud server as described above may be used as the server computer.

In the event presentation server 50, a program having the following functions operates. The event presentation server 50 includes, for its functions, a communicator 52, an input acquisitor 54, a relation analyzer 56, an event presenter 58, an outputter 60, a model generator 61, and a memory 62. The user terminal 10 and the communicator 52 of the event presentation server 50 are connected via the network 80. The memory 62 includes a product memory 64, a registration memory 66, an event memory 68, and a model memory 69.

The input acquisitor 54 includes a purchase information acquisitor 55, a purpose acquisitor 57, and an area acquisitor 59. The purchase information acquisitor 55 acquires an input of information indicating product purchase, such as selection and order of an exercise-related product by a user as a prospective purchaser, from the user terminal 10 on the network 80 via the communicator 52. The purpose acquisitor 57 acquires an input of information identifying the user, information indicating a purchase purpose of an exercise-related product, information about an exercise history of a user, or the like from the user terminal 10. The area acquisitor 59 acquires information indicating an area to which a user belongs, as personal information of the user as a prospective purchaser, from the user terminal 10. The history acquisitor 53 acquires information indicating an exercise history input by a user as a prospective purchaser, from the user terminal 10.

The product memory 64 stores product information 70 including details of an exercise-related product. The product information 70 includes information such as the kind of an exercise-related product, a product name, the kind of an exercise, and a purchase purpose input by a past purchaser. In a case where the exercise-related product is running shoes, the included information is, for example, the kind "running shoes", the product name "SU-4 from AAA company", or the kind of the exercise "marathon", "running", or "jogging". In a case where the exercise-related product is a shirt for running, the included information is the kind "running wear", the product name "running short sleeve shirt RUN-A from AAA company", the kind of the exercise "running" or "trail running", or the like. The product information 70 mainly includes information provided from a manufacturer of an exercise-related product or an operator of a product sales site and information input by a past purchaser of an exercise-related product.

The registration memory 66 stores purchaser information 74 including purchase information 72 about an exercise-related product, personal information of a purchaser, and the like. The purchase information 72 includes records of information about a purchaser of each exercise-related product and information indicating a purchase purpose for the purchaser. The purchaser information 74 includes account information, personal information, and the like of a user who is a purchaser. The account information of a user is information necessary for log-in to a product sales site, such as a user ID and a password. The account information of a user is generated on the basis of information acquired by input in an account registration procedure when the user first uses the product sales site or the event presentation server 50, or on the basis of information acquired by inquiring of another server. The information acquired from another server may be personal information recorded in another server, such as the alliance server 90, in association with membership information for another service such as a participation registration procedure in an exercise-related event.

The personal information of a user includes information such as a name, a nickname, an address, and a contact address, attribute information such as an age and a gender, information about a team and a group to which the user belongs, product purchase history information, event participation registration history information, and information indicating an exercise history. The personal information is not limited to an address or a residence, and may include information indicating an area to which a user belongs or an area selected by the user, such as an area where the user often stays due to commuting to an office or school, a business trip, or the like. The product purchase history information may be information indicating a history of a past purchase of an exercise-related product by a user in the event presentation server 50 as an exercise-related product sales site.

The event participation registration history information may be information indicating a history of past participation registration of a user in an exercise-related event in the alliance server 90 as a site that mediates a participation registration procedure of an exercise-related event. In a case where the past exercise-related event participated in is a race or a competition, information regarding the results of the event may be further included. For example, in a case where the exercise-related event is a marathon or a trail running race, information about the completion time may be included in the event participation registration history information. For example, in a case where the exercise-related event is golf, score information may be included in the event participation registration history information.

For example, in the case of a marathon or running, the information indicating an exercise history may be running log data measured by a user using a watch or a smartphone with a positioning function, that is, log data recording running date and time, a running distance, a running time, position information, and the like. For example, in the case of golf, the information indicating an exercise history may be log data recording the date and time, the place, the score, and the like of a round. The competition level such as running ability of a user is determined by analysis based on the log data, and recorded. For example, in the case of a marathon or running, a monthly running distance, a monthly running time, a weekly running frequency, and the like may be calculated to estimate the running ability and the competition level. The information indicating an exercise history may include vital information. Specifically, the information indicating an exercise history may include one or more among body temperature, blood pressure, a heart rate, arterial oxygen saturation (SpO2), and maximum oxygen intake (VO2Max).

The event memory 68 stores event information 76 recording event details including schedule information of an exercise-related event together with accompanying information 77 including information indicating a participation purpose of the exercise-related event and evaluation information input by a past registered participant. The information about a participation purpose of an exercise-related event indicates contents such as the target range of participants of the exercise-related event, the goal that can be achieved by participating in the event, and the matter considered as the motivation to participate in the event. The information about a participation purpose of an exercise-related event may be information defined by the event organizer or may be a content input by a past participant as the participant's participation purpose.

For example, in a case where the exercise-related event is a marathon or trail running race, a participation purpose to which the exercise-related event corresponds may be a very competition-focused purpose such as "completing a race", "self-record updating", "sub 4-hour marathon", "sub 3.5-hour marathon", or "sub 3-hour marathon", or may be a not so competition-focused purpose such as "maintaining health", "solving lack of exercise", or "self-development". For example, in a case where the exercise-related event is a marathon practice meeting, a participation purpose to which the exercise-related event corresponds may be a purpose indicating a level range of participants, such as "beginner", "intermediate", "advanced-level", "goal of sub 4-hour marathon", "goal of sub 3.5-hour marathon", or "goal of sub 3-hour marathon". Alternatively, the exercise-related event may correspond to a purpose considered as motivation to participate in the event, such as "future goal of participating in a marathon" or "goal of continuing running". For example, in a case where the exercise-related event is a fan run event, a participation purpose to which the exercise-related event corresponds may be a purpose like motivation to start exercise, such as "goal of starting running" or "goal of making running a habit".

The event memory 68 further stores related selection information 78. In a case where a user who is a purchaser of an exercise-related product selects any one of a plurality of recommended events presented to the user as a target of an intention to participate or an interest, the recommended event selected by the user and the exercise-related product are considered to be related to each other, and the related selection information 78 records the correspondence. A pair of an exercise-related product and an exercise-related event having correspondence recorded in the related selection information 78 a larger number of times is regarded to be more relevant, and the related selection information 78 is referred to so that the event is recommended to a purchaser of the product at higher priority. The related selection information 78 also records a relationship between a participation purpose of a recommended event selected by a user and a purchase purpose of an exercise-related product, and the relationship is referred to in event recommendation.

The model memory 69 stores a prediction model 79 for extraction of an exercise-related event corresponding to a participation purpose related to a purchase purpose of an exercise-related product for a user based on a correlation among the product information 70, the purchase information 72, the purchaser information 74, the event information 76, the accompanying information 77, and the related selection information 78. The prediction model 79 is a model that analyzes a correlation among a large number of data included in each of the product information 70, the purchase information 72, the purchaser information 74, the event information 76, the accompanying information 77, and the related selection information 78 using a statistical method, and for example, principal component analysis or multiple regression analysis may be used. Alternatively, the prediction model 79 may be a model using machine learning (for example, deep learning). The model generator 61 generates the prediction model 79 by statistical analysis or machine learning (for example, deep learning) using a large number of data included in each of the product information 70, the purchase information 72, the purchaser information 74, the event information 76, the accompanying information 77, and the related selection information 78. The prediction model 79 may be a model obtained by fine-tuning an existing large-scale language model using information such as the product information 70, the purchase information 72, the purchaser information 74, the event information 76, the accompanying information 77, and the related selection information 78. In a modification, the prediction model 79 may be a model based on a rule defined artificially in advance using a large number of data included in each of the product information 70, the purchase information 72, the purchaser information 74, the event information 76, the accompanying information 77, and the related selection information 78.

The relation analyzer 56 extracts an exercise-related event corresponding to a participation purpose related to a purchase purpose of an exercise-related product for a user who is a prospective purchaser from the event memory 68 on the basis of the prediction model 79. That is, using the prediction model 79, the relation analyzer 56 analyzes information such as the detailed information about an exercise-related product included in the product information 70 and the information about a purchase purpose of an exercise-related product included in the purchaser information 74 and analyzes a relation between an exercise-related event and a participation purpose, and extracts the optimal exercise-related event. The relation analyzer 56 determines the extracted exercise-related event as a recommended event. As a result, the relation analyzer 56 can extract an exercise-related event related to an exercise-related product on the basis of each element as described below.

### (Relation Based on Area)

In a case where the purchaser information 74 includes information indicating an area to which a user who is a prospective purchaser belongs or an area selected by a user, the prediction model 79 is formed so that a recommended event can be determined according to the priority based on the information about an area included in the purchaser information 74. Thus, the relation analyzer 56 can preferentially determine an exercise-related event held in an area indicated by the purchaser information 74 or the neighborhood of the area as a recommended event.

### (Relation Based on Date)

The prediction model 79 is formed so that a recommended event can be determined according to the priority based on information about the kind and a date of an exercise-related event included in the event information 76. For example, in the case of an exercise-related event of a kind of a lesson or with low competitiveness, the prediction model 79 is formed so that an event held at a date close to a purchase date is preferentially extracted. In the case of an exercise-related event of a kind of a race such as a marathon, the prediction model 79 is formed so that an event held at a date about several months to half a year later, which is a period necessary for training and preparation, is preferentially extracted. Thus, the relation analyzer 56 can preferentially determine an exercise-related event held at an appropriate date in accordance with a purchase date and a purchase purpose of an exercise-related product as a recommended event.

### (Relation Based on Exercise History)

In a case where the purchaser information 74 includes information about an exercise history of a user who is a prospective purchaser, the prediction model 79 is formed so that a recommended event can be determined according to the priority based on the exercise history included in the purchaser information 74. Thus, the relation analyzer 56 can preferentially determine an appropriate exercise-related event in accordance with the user's exercise experience level or competition level based on the exercise history included in the purchaser information 74 as a recommended event.

### (Relation Based on Selection History)

In a case where the related selection information 78 is recorded in correspondence with at least a part of the exercise-related events included in the event information 76, the prediction model 79 is formed so that a recommended event can be determined according to the priority based on the correspondence with the exercise-related products recorded in the related selection information 78 for each exercise-related event. Thus, the relation analyzer 56 can preferentially determine an exercise-related event that has been selected by a user in the past in relation to an exercise-related product as a recommended event.

### (Relation Based on Evaluation)

In a case where at least a part of the exercise-related events included in the event information 76 corresponds to the accompanying information 77, the prediction model 79 is formed so that a recommended event can be determined according to the priority based on the evaluation level included in the accompanying information 77 for each exercise-related event. Thus, the relation analyzer 56 can preferentially determine a highly evaluated exercise-related event as a recommended event.

### (Relation Based on Past Participation History)

In a case where the purchaser information 74 records an exercise-related event in which a user who is a prospective purchaser registered participation, the prediction model 79 may be formed so that the priority becomes high for an exercise-related event similar to an exercise-related event in which each user participated on the basis of the participation purpose. Thus, the relation analyzer 56 can preferentially determine an exercise-related event matching to the user's preference or exercise level as a recommended event.

### (Relation Based on Latest Participation History)

In a case where the purchaser information 74 records an exercise-related event in which a user who is a prospective purchaser recently participated, the prediction model 79 may be formed so that the priority becomes particularly high for an exercise-related event similar to an exercise-related event in which each user recently participated on the basis of the participation purpose. Thus, the relation analyzer 56 can preferentially determine an exercise-related event matching to the user's latest preference or exercise level as a recommended event.

### (Relation Based on Past Self-Input Evaluation)

In a case where the accompanying information 77 records the evaluation input by a user who is a prospective purchaser regarding an exercise-related event in which the user participated, the prediction model 79 may be formed so that a recommended event is determined according to the priority based on the evaluation level input by the user. Thus, the relation analyzer 56 can preferentially determine a highly evaluated exercise-related event based on evaluation information of each user as a recommended event.

The event presenter 58 presents a determined recommended event to a user who is a prospective purchaser via the outputter 60. The event presenter 58 may present an output content, to a user, including a recommended event and information about a participation purpose, a reason for recommendation, and the degree of recommendation for each recommended event. The outputter 60 presents a recommended event to a user by transmitting an output content for presentation of the recommended event generated by the event presenter 58 to the user terminal 10 via the communicator 52 and the network 80.

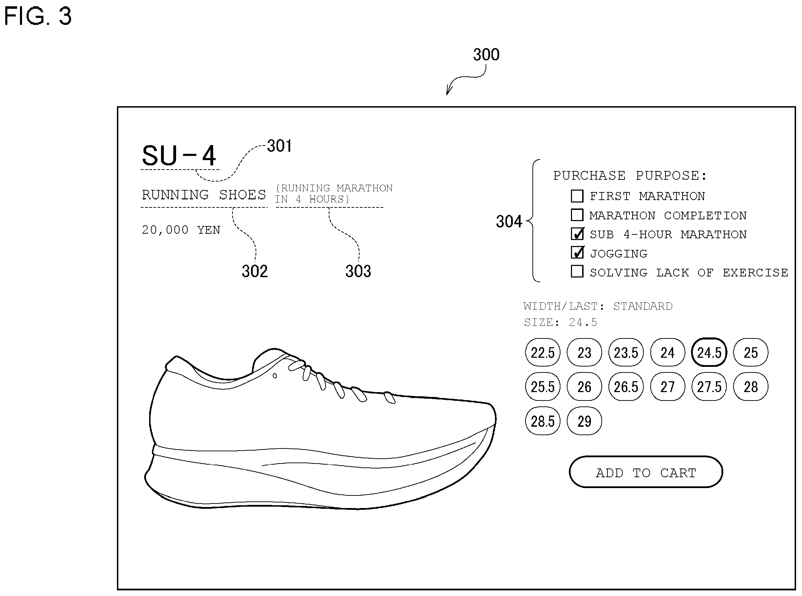

Fig. 3 schematically illustrates an example of a sales screen of an exercise-related product. A product sales screen 300 is a screen for online sales of running shoes as an exercise-related product. The product sales screen 300 displays character strings indicating a product name 301, a product kind 302, and a product category 303, and in addition, displays a product image, a price, a size selection button, an order button, and the like. The product kind 302 indicates the kind of an exercise-related product, such as "running shoes". The product category 303 is information indicating a category obtained by further subdividing the kind of an exercise-related product, a use, a target persona range, and the like. In a case where the product category 303 is "running marathon in 4 hours", the product category 303 indicates that the product is mainly purchased by a person who can complete a marathon in about 4 hours or a person who aims to complete a marathon in about 4 hours.

The product sales screen 300 further displays a purchase purpose field 304. The purchase purpose field 304 is an input field in a form in which the purchase purpose of an exercise-related product is selected from a plurality of options. As the purchase purpose of running shoes, items such as "first marathon", "marathon completion", "sub 4-hour marathon", "jogging", and "solving lack of exercise" are displayed as options. In a case where a prospective purchaser does not select any option in the purchase purpose field 304, for example, when the prospective purchaser selects a product of a category displayed as the product category 303, a purchase purpose may be estimated from the product category 303. For example, in a case where the product category 303 is "running marathon in 4 hours", it may be estimated that the prospective purchaser aims to complete a marathon in 4 hours. A plurality of options may be selectable as a purchase purpose.

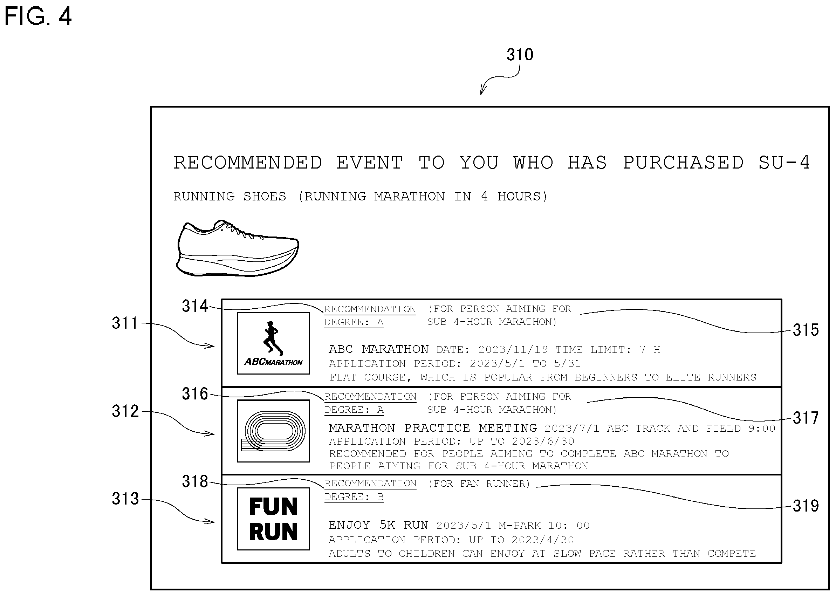

Fig. 4 schematically illustrates an example of a presentation screen of recommendation of an exercise-related event. An event presentation screen 310 is a screen that presents an exercise-related event to be recommended. The event presentation screen 310 is a page generated by the event presenter 58, and is a screen that presents a recommended event determined by the relation analyzer 56 to a user and allows the user to select the recommended event as an option. The event presentation screen 310 presents three recommended events that are a first recommended event 311, a second recommended event 312, and a third recommended event 313.

The first recommended event 311 is displayed in a link format to present a marathon race called "ABC marathon", which is an exercise-related event, as a recommended event. For the first recommended event 311, a character string indicating a high recommendation degree, such as "recommendation degree: A", is displayed as a recommendation degree 314, indicating a strong relation between an exercise-related product "running shoes" and the purchase purpose "sub 4-hour marathon". For the first recommended event 311, a character string such as "for person aiming for sub 4-hour marathon" is displayed as a corresponding participation purpose 315, indicating a strong relation between the exercise-related product "running shoes" and the purchase purpose "sub 4-hour marathon". Thus, it is indicated that a "sub 4-hour marathon" or a person aiming for a "sub 4-hour marathon" is assumed to be one of the participation purposes or the target personas of the exercise-related event "ABC marathon". "2023/11/19" is displayed as the date of the race, "time limit: 7 hours" is displayed as a race outline, and "2023/5/1 to 5/31" is displayed as the application period. Furthermore, as a race outline or a reason for recommendation, "flat course, which is popular from beginners to elite runners" is displayed. The venue "ABC city" is an area to which the user who is a purchaser of the exercise-related product belongs or a neighboring area of the area. From the link of the first recommended event 311, the race participation registration site of the alliance server 90 can be opened to check details or to apply for participation.

The second recommended event 312 is displayed in a link format to present a practice meeting called "marathon practice meeting", which is an exercise-related event, as a recommended event. As a recommendation degree 316 of the second recommended event 312, a character string indicating a high recommendation degree, such as "recommendation degree: A", is also displayed, indicating a strong relation between the exercise-related product "running shoes" and the purchase purpose "sub 4-hour marathon". For the second recommended event 312, a character string such as "for person aiming for sub 4-hour marathon" is also displayed as a corresponding participation purpose 317, indicating a strong relation between the exercise-related product "running shoes" and the purchase purpose "sub 4-hour marathon". "2023/7/1" is displayed as the date of the practice meeting, "ABC track and field stadium 9:00" is displayed as the venue and the time of the practice meeting, and "up to 2023/6/30" is displayed as the application period. As an event outline or a reason for recommendation, "recommended for people aiming to complete ABC marathon" is displayed. The venue "ABC track and field stadium" is in an area to which the user who is a purchaser of the exercise-related product belongs or a neighboring area of the area. From the link of the second recommended event 312, the event participation registration site of the alliance server 90 can be opened to check details or to apply for participation.

The third recommended event 313 is displayed in a link format to present an event called "enjoy 5K run", which is an exercise-related event, as a recommended event. For the third recommended event 313, a character string indicating a medium recommendation degree, such as "recommendation degree: B", is displayed as a recommendation degree 318, indicating a strong relation between the exercise-related product "running shoes" and the purchase purpose "jogging". For the third recommended event 313, a character string such as "for fan runner" is displayed as a corresponding participation purpose 315, indicating a strong relation between the exercise-related product "running shoes" and the purchase purpose "jogging". Thus, it is indicated that "jogging" or a person whose purpose is "jogging" is assumed to be one of the participation purposes or the target personas of the exercise-related event "enjoy 5K run". "2023/5/1" is displayed as the date of the practice meeting, "M-PARK 10:00" is displayed as the venue and the time of the practice meeting, and "up to 2023/4/30" is displayed as the application period. As an event outline or a reason for recommendation, "adults to children can enjoy at slow pace rather than compete" is displayed. The venue "M-PARK" is in an area to which the user who is a purchaser of the exercise-related product belongs or a neighboring area of the area. From the link of the third recommended event 313, the event participation registration site of the alliance server 90 can be opened to check details or to apply for participation.

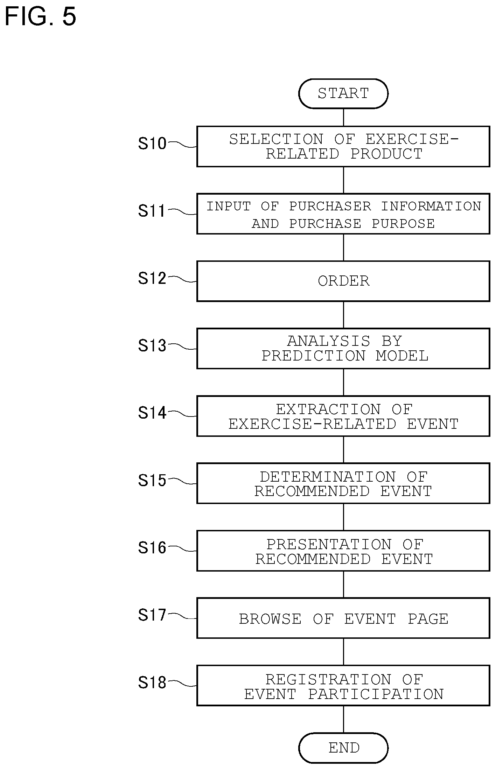

Fig. 5 is a flowchart illustrating a process of presenting a recommended event to a prospective purchaser of a product. A user who is a prospective purchaser of an exercise-related product selects a product that the user wishes to purchase (S10), inputs purchaser information necessary for purchasing the product and information such as a purchase purpose (S11), and executes an order (S12). Using the prediction model 79, the relation analyzer 56 analyzes relation between information, such as the detailed information such as the kind of an exercise-related product, a product name, the kind of an exercise, and a use included in the product information 70, the information about a purchase purpose included in the purchase information 72, and the information indicating a competition level included in the purchaser information 74, and the kind of an exercise of an exercise-related event and a participation purpose (S13). The relation analyzer 56 extracts an exercise-related event corresponding to a participation purpose related to a purchase purpose of the exercise-related product to be purchased by the user from the event memory 68 on the basis of the analysis result by the prediction model 79 (S14), determines the exercise-related event as a recommended event, and generates an output content (S15). The event presenter 58 presents the output content including the determined recommended event to the user (S16). The user selects any recommended event, and browses a linked detailed page for the exercise related event (S17). The user appropriately registers participation in the recommended exercise-related event (S18).

### (Second Embodiment)

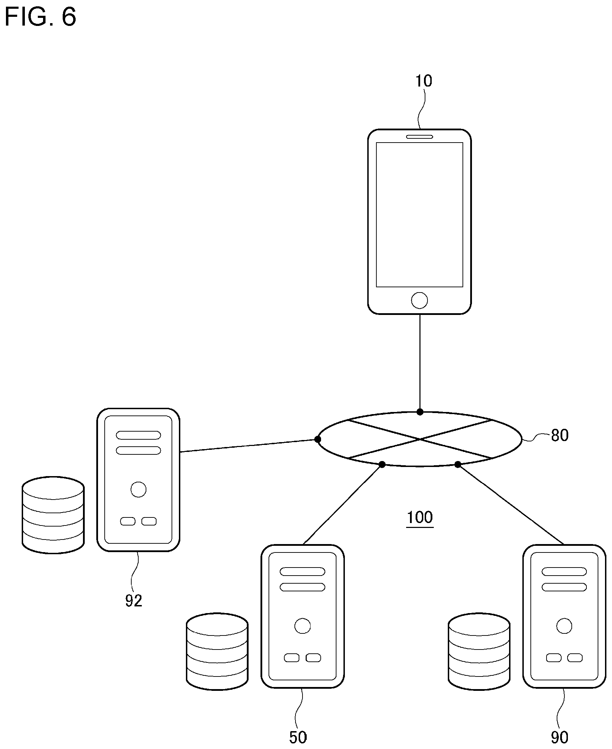

Fig. 6 illustrates a basic configuration of an event presentation system 100 in a second embodiment. The second embodiment is different from the first embodiment in that the event presentation system 100 of the second embodiment further includes a product sales server 92 and the product sales server 92 processes a procedure such as order processing in online sales of an exercise-related product, and the second embodiment is the same as the first embodiment in other points. Hereinafter, differences from the first embodiment will be mainly described, and description of the same points will be omitted.

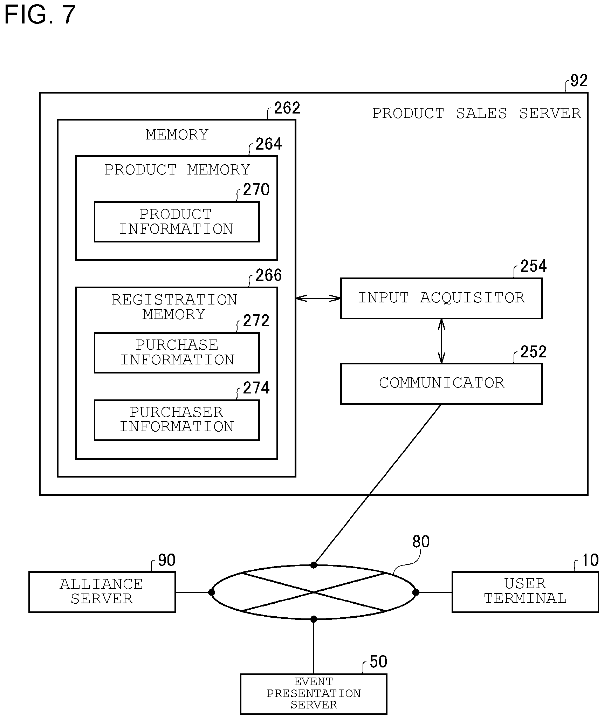

Fig. 7 is a functional block diagram illustrating each configuration of the product sales server 92. The product sales server 92 includes a communicator 252, an input acquisitor 254, and a memory 262. The communicator 252 corresponds to the communicator 52 of the event presentation server 50. The input acquisitor 254 corresponds to the input acquisitor 54 of the event presentation server 50. The memory 262 corresponds to the memory 62 of the event presentation server 50.

The memory 262 includes a product memory 264 structured to store product information 270, and includes a registration memory 266 structured to store purchase information 272 and purchaser information 274. The product memory 264 corresponds to the product memory 64 of the event presentation server 50. The registration memory 266 corresponds to the registration memory 66 of the event presentation server 50.

In the second embodiment, the product sales server 92 also has at least the functions of the input acquisitor 54, the product memory 64, and the registration memory 66 among the functions of the event presentation server 50 of the first embodiment. The information of the product information 270, the purchase information 272, and the purchaser information 274 registered in the memory 262 is transmitted from the product sales server 92 to the event presentation server 50. Thus, in the configuration of the second embodiment, the functions of the event presentation server 50 of the first embodiment are distributed to or duplicated in the event presentation server 50 and the product sales server 92.

In the second embodiment, the event presentation server 50 or the product sales server 92 has many of the characteristic functions included in the "event presentation" in the claims, and thus many of the characteristic functions are implemented. Therefore, the event presentation server 50 or a combination of the event presentation server 50 and the product sales server 92 substantially corresponds to "event presentation". However, the characteristic functions of the "event presentation" may be distributed to or duplicated in the event presentation server 50 and the product sales server 92, or may be implemented in a form in which the event presentation server 50 has many of the characteristic functions. Alternatively, the characteristic functions of the "event presentation" may refer to the entire event presentation system 100. Alternatively, the characteristic functions may refer to only the event presentation server 50. Alternatively, the characteristic functions may refer to a combination of at least one of the user terminal 10, the alliance server 90, or the product sales server 92 and the event presentation server 50. Alternatively, the characteristic functions may be implemented in the form of being distributed to or duplicated in the event presentation server 50, the product sales server 92, and the user terminal 10.

The embodiments have been described above. It is to be understood by those skilled in the art that the embodiments are examples, combinations of the constituent elements and the processing processes have various modifications, and such modifications are also within the scope. The following aspects can be obtained by generalizing the above-described embodiments.

An event presentation system according to a first aspect includes: a product memory structured to store information regarding a purchase purpose input by a past purchaser of an exercise-related product; an event memory structured to store schedule information of an exercise-related event and information regarding a participation purpose input by a past participant of the exercise-related event; a purchase information acquisitor structured to acquire information indicating purchase of a product by a prospective purchaser; a purpose acquisitor structured to acquire information regarding a purchase purpose of a product for the prospective purchaser; a relation analyzer structured to determine a recommended event that is an exercise-related event corresponding to a participation purpose related to a purchase purpose for the prospective purchaser; and an event presenter structured to present the recommended event determined, to the prospective purchaser, as an exercise-related event related to a purchase purpose for the prospective purchaser.

According to this aspect, an exercise-related event is timely proposed to a purchaser at a timing of purchasing an exercise-related product, that is, a purchaser considered to be in a state of high motivation to exercise, and thus not only the motivation of the purchaser can be boosted, but also a person who is highly likely to register participation can be introduced to an event organizer.

An event presentation system according to a second aspect may further include an area acquisitor structured to acquire information indicating an area to which the prospective purchaser belongs in the event presentation system according to the first aspect. The event memory may further store information indicating a venue of the exercise-related event, and the relation analyzer may determine an exercise-related event, as the recommended event, in a venue related to the area to which the prospective purchaser belongs.

According to this aspect, an exercise-related event in an area to which the purchaser belongs is timely proposed to the purchaser at a timing of purchasing an exercise-related product, that is, the purchaser considered to be in a state of high motivation to exercise, and thus not only the motivation of the purchaser can be boosted, but also a person who is highly likely to register participation can be introduced to an event organizer.

In an event presentation system according to a third aspect, the event memory may further store information indicating a date of the exercise-related event, and the relation analyzer may determine an exercise-related event, as the recommended event, held at a date corresponding to a purchase date and the purchase purpose for the prospective purchaser in the event presentation system according to the first or the second aspect.

According to this aspect, an exercise-related event aligning with an exercise purpose and held at an appropriate date is timely proposed to the purchaser at a timing of purchasing an exercise-related product, that is, the purchaser considered to be in a state of high motivation to exercise, and thus not only the motivation of the purchaser can be boosted, but also a person who is highly likely to register participation can be introduced to an event organizer.

An event presentation system according to a fourth aspect may further include a history acquisitor structured to acquire an exercise history of the prospective purchaser in the event presentation system according to any one of the first to the third aspects. The relation analyzer may determine an exercise-related event, as the recommended event, corresponding to an exercise history and the purchase purpose for the prospective purchaser.

According to this aspect, an appropriate exercise-related event matching the exercise level of the purchaser is timely proposed to the purchaser at a timing of purchasing an exercise-related product, that is, the purchaser considered to be in a state of high motivation to exercise, and thus not only the motivation of the purchaser can be boosted, but also a person who is highly likely to register participation can be introduced to an event organizer.

An event presentation method according to a fifth aspect includes the steps of: acquiring information indicating purchase of a product by a prospective purchaser and information regarding a purchase purpose of a product for the prospective purchaser via a network; reading information from a region storing information regarding a purchase purpose input by a past purchaser of an exercise-related product; reading information from a region storing schedule information of an exercise-related event and information regarding a participation purpose input by a past participant of the exercise-related event; determining a recommended event that is an exercise-related event corresponding to a participation purpose related to a purchase purpose for the prospective purchaser; and presenting the recommended event determined, to the prospective purchaser via a network, as an exercise-related event related to a purchase purpose for the prospective purchaser.

According to this aspect, an exercise-related event is timely proposed to a purchaser at a timing of purchasing an exercise-related product, that is, a purchaser considered to be in a state of high motivation to exercise, and thus not only the motivation of the purchaser can be boosted, but also a person who is highly likely to register participation can be introduced to an event organizer.

### INDUSTRIAL APPLICABILITY

The present disclosure relates to an event presentation system and an event presentation method.

### REFERENCE SIGNS LIST

50 event presentation server, 54 input acquisitor, 56 relation analyzer, 58 event presenter, 60 outputter, 61 model generator, 62 memory, 64 product memory, 66 registration memory, 68 event memory, 69 model memory, 70 product information, 72 purchase information, 74 purchaser information, 76 event information, 77 accompanying information, 78 related selection information, 79 prediction model, 90 alliance server, 92 product sales server, 100 event presentation system,

## Claims

1. An event presentation system comprising:
a product memory structured to store information regarding a purchase purpose input by a past purchaser of an exercise-related product;
an event memory structured to store schedule information of an exercise-related event and information regarding a participation purpose input by a past participant of the exercise-related event;
a purchase information acquisitor structured to acquire information indicating purchase of a product by a prospective purchaser;
a purpose acquisitor structured to acquire information regarding a purchase purpose of a product for the prospective purchaser;
a relation analyzer structured to determine a recommended event that is an exercise-related event corresponding to a participation purpose related to a purchase purpose for the prospective purchaser; and
an event presenter structured to present the recommended event determined, to the prospective purchaser, as an exercise-related event related to a purchase purpose for the prospective purchaser.

2. The event presentation system according to claim 1, further comprising an area acquisitor structured to acquire information indicating an area to which the prospective purchaser belongs, wherein
the event memory further stores information indicating a venue of the exercise-related event, and
the relation analyzer determines the recommended event that is an exercise-related event in a venue related to an area to which the prospective purchaser belongs.

3. The event presentation system according to claim 1 or 2, wherein
the event memory further stores information indicating a date of the exercise-related event, and
the relation analyzer determines the recommended event that is an exercise-related event held at a date corresponding to a purchase date and the purchase purpose for the prospective purchaser.

4. The event presentation system according to any one of claims 1 to 3, further comprising a history acquisitor structured to acquire an exercise history of the prospective purchaser, wherein
the relation analyzer determines the recommended event that is an exercise-related event corresponding to an exercise history and the purchase purpose for the prospective purchaser.

5. An event presentation method comprising the steps of:
acquiring information indicating purchase of a product by a prospective purchaser and information regarding a purchase purpose of a product for the prospective purchaser via a network;
reading information from a memory storing information regarding a purchase purpose input by a past purchaser of an exercise-related product;
reading information from a memory storing schedule information of an exercise-related event and information regarding a participation purpose input by a past participant of the exercise-related event;
determining a recommended event that is an exercise-related event corresponding to a participation purpose related to a purchase purpose for the prospective purchaser; and
presenting the recommended event determined, to the prospective purchaser via a network, as an exercise-related event related to a purchase purpose for the prospective purchaser, wherein
the event presentation method is to be executed by a computer capable of accessing a product memory and an event memory.
